**Europäisches Patentamt**

**European Patent Office**

**Office européen des brevets**

(19)

(11) Veröffentlichungsnummer: **0 531 750 B1**

(12) **EUROPÄISCHE PATENTSCHRIFT**

(45) Veröffentlichungstag der Patentschrift: **14.06.95**

(51) Int. Cl.⁶: **B29C 65/34**, F16L 47/02

(21) Anmeldenummer: **92114002.6**

(22) Anmeldetag: **17.08.92**

(54) **Verfahren zum Verschweissen von aus thermoplastischem Kunststoff bestehenden Rohren.**

(30) Priorität: **07.09.91 DE 4129855**

(43) Veröffentlichungstag der Anmeldung:
**17.03.93 Patentblatt 93/11**

(45) Bekanntmachung des Hinweises auf die
Patenterteilung:
**14.06.95 Patentblatt 95/24**

(84) Benannte Vertragsstaaten:
**AT CH DE ES FR GB IT LI NL SE**

(56) Entgegenhaltungen:
EP-A- 0 002 959      EP-A- 0 240 298
EP-A- 0 322 508      EP-A- 0 366 299
EP-A- 0 382 971      CH-A- 336 980
DE-A- 3 808 228      DE-U- 9 107 311
FR-A- 1 374 690      NL-A- 7 310 950
US-A- 4 946 206

PATENT ABSTRACTS OF JAPAN vol. 6, no.
120 (M-140)(998) 3. Juli 1982 & JP-A-57 046
851 (SEKISUI PLASTICS)

(73) Patentinhaber: **Hegler, Wilhelm**
**Goethestrasse 2**
**D-97688 Bad Kissingen (DE)**

(72) Erfinder: **Hegler, Ralph-Peter, Dr.**
**Schillerstrasse 7**
**W-8730 Bad Kissingen (DE)**
Erfinder: **Hegler, Wilhelm**
**Goethestrasse 2**
**W-8730 Bad Kissingen (DE)**

(74) Vertreter: **Rau, Manfred, Dr. Dipl.-Ing. et al**
**Rau, Schneck & Hübner**
**Patentanwälte**
**Königstrasse 2**
**D-90402 Nürnberg (DE)**

## Beschreibung

Die Erfindung betrifft ein Verfahren nach dem Oberbegriff des Anspruches 1.

Rohre der gattungsgemäß vorausgesetzten Art, bei denen es sich um auch als Doppelwandrohre bezeichnete Verbundrohre oder Rippenrohre handelt, werden in der Praxis üblicherweise mittels Muffen verbunden. Hierbei kann es sich um sogenannte Doppelsteckmuffen handeln, in die die beiden miteinander zu verbindenden Rohre eingesteckt werden, oder um an einem Rohrende angebrachte oder ausgebildete Muffen. Um eine flüssigkeits- und/oder gasdichte Verbindung der Rohre sicherzustellen, werden Dichtringe auf Elastomerbasis eingesetzt.

Bei Vollwandrohren aus Polyethylen oder Polypropylen ist es in der Praxis bekannt geworden, die miteinander zu verbindenden, senkrecht zur Mittel-Längs-Achse der Rohre verlaufenden Stirnwände mittels eines beheizten Schweißspiegels zu plastifizieren und anschließend - nach Herausziehen des Schweißspiegels - die Rohre unter entsprechendem Schweißdruck zusammenzufügen. In der Praxis ist es für Verbundrohre auch bekannt geworden, eine solche Schweißverbindung herzustellen, wobei die miteinander zu verschweißenden Stirnwände im Bereich jeweils eines Wellentales des Rohres angeordnet werden. Nachteilig ist bei dieser Alt der Schweißverbindung, daß an der Innenwand des Rohres ein Schweißwulst entsteht, der in den Innenraum des Rohres hineinragt, durch den Flüssigkeiten transportiert werden. Derartige Schweißwülste müssen mit entsprechend hohem Aufwand durch eine spanabhebende Bearbeitung entfernt werden. Bei dem Verschweißen von Verbund-Rohren oder Rippenrohren kommt hinzu, daß die die Stirnwände tragenden Rohrabschnitte eine relativ geringe Dicke haben, so daß die Festigkeit der Schweißverbindung zumindest nicht immer unter Baustellenbedingungen gewährleistet werden kann. Es kommt hinzu, daß das Spiegel-Schweißverfahren auf Baustellen nur schwer auszuführen ist, da das Plan-Schneiden der Stirnwände und deren Säubern, das Verschweißen, das Nacharbeiten der Innenwülste und dergleichen mit erheblichem Aufwand verbunden ist. Darüber hinaus sind Rohre aus thermoplastischem Kunststoff unvermeidbar in geringem Maße oval, so daß die ohnehin zu geringen Wanddicken der miteinander zu verschweißenden Wandabschnitte nicht in vollem Umfang ausgenützt werden können. Die mechanischen Eigenschaften derartig verschweißter Verbundrohre oder Rippenrohre sind daher nicht immer befriedigend.

Aus der CH 672 041 A5 (entspr. US 4 869 533 A) ist es bekannt, Vollwandrohre in der Weise durch Verschweißen miteinander zu verbinden, daß über die einander zugewandten Enden ein Heizelement geschoben wird, das mit zur Verschweißung verwendetem Kunststoff ummantelt ist. Es wird weiterhin eine das Heizelement umgebende Muffe aufgesetzt. In der Muffe sind Austrittsöffnungen angebracht, durch die überschüssiger Kunststoff austritt, wodurch gleichzeitig eine Anzeige dafür geschaffen wird, daß die Schweißung abgeschlossen ist. Die Verbindung der Vollwandrohre erfolgt an ihrer Außenseite. Hierdurch treten auch keine in den Innenraum der Rohre ragenden Schweißwulste auf. Diese Art zur Verschweißung von Vollwandrohren ist einfach durchzuführen und baustellenfreundlich. Zur Verbindung der gattungsgemäß vorausgesetzten Rohre ist dieses Verfahren allerdings nur bedingt geeignet.

Der Erfindung liegt die Aufgabe zugrunde, ein Verfahren zum Verschweißen von Rohren der gattungsgemäßen Art zu schaffen, das insbesondere zum Verschweißen von Verbundrohren und Rippenrohren einsetzbar ist und außer absoluter Dichtheit optimale mechanische Eigenschaften der Schweißverbindung gewährleistet.

Diese Aufgabe wird durch die Verfahrensschritte nach dem Kennzeichnungsteil des Anspruches 1 gelöst. Kern der Erfindung ist, daß der zu verschweißende Bereich in den Außenbereich der Verbundrohre oder Rippenrohre verlegt wird, wobei der Außenbereich durch die Wellenberge bei Verbundrohren bzw. die Radial-Rippen bei Rippenrohren gebildet wird. Zusätzlich können auch das Wellental bzw. der Wellengrund und die primär zum Zentrieren der Rohre notwendige Muffe mit zur Herstellung der Schweißverbindung herangezogen werden. Die im Anspruch 1 angegebenen Verfahrensschritte müssen nicht immer in der dort angegebenen Reihenfolge durchgeführt werden. So kann insbesondere dann, wenn die Muffe als Doppelsteckmuffe ausgebildet ist, zuerst der Schweißring auf ein Rohrende aufgesteckt werden und dann die Muffe darübergeschoben oder über das Ende des anderen Rohres geschoben werden. Nach Anspruch 2 kann ein von der Muffe gesonderter Schweißring eingesetzt werden. Nach Anspruch 3 kann in besonders vorteilhafter Ausgestaltung aber auch ein einstückig mit der Muffe ausgebildeter Schweißring eingesetzt werden, wobei dann die Montage des Schweißrings und der Muffe gleichzeitig erfolgt. Wenn Schweißring und Muffe voneinander gesondert sind, dann kann die elektrische Widerstandsheizung auch noch im Bereich der Außenseite des Schweißringes vorgesehen sein, so daß der Schweißring und die Muffe miteinander verschweißt werden. Wenn Muffe und der Schweißring einstückig ausgebildet sind, ist dies naturgemäß nicht mehr erforderlich.

Um sicherzustellen, daß zumindest eine ganzflächige Verbindung zwischen dem Schweißring und den an diesem anliegenden Seitenwand-Abschnitten der Erhebungen erfolgt, ist die Weiterbildung nach Anspruch 5 vorgesehen. Um wiederum hierbei sicherzustellen, daß kein Schweißwulst an der Innenseite des Innen-Rohres gebildet wird, ist die weitere Ausgestaltung nach Anspruch 6 vorgesehen, und zwar insbesondere in der Ausbildung nach Anspruch 7. Anspruch 8 gibt eine besonders vorteilhafte Ausgestaltung hierzu an.

Weitere Vorteile, Merkmale und Einzelheiten der Erfindung ergeben sich aus weiteren Unteransprüchen und der nachfolgenden Beschreibung von Ausführungsbeispielen anhand der Zeichnung. Es zeigt

Fig. 1    zwei als Verbundrohre ausgebildete, miteinander verschweißte Rohre in einer teilweise aufgebrochenen Darstellung,

Fig. 2    eine Teil-Darstellung der Rohre nach Fig. 1 in einer Darstellung vor dem Verschweißen,

Fig. 3    eine Teil-Darstellung aus Fig. 1 mit zwei miteinander verschweißten Verbundrohren, bei denen ein gegenüber Fig. 1 und 2 abgewandelter Schweißring eingesetzt wurde,

Fig. 4    eine Teil-Darstellung von zwei miteinander verschweißten Rohren, zu deren Verschweißen eine Muffe mit einstückig angeformtem Schweißring eingesetzt wurde und

Fig. 5    eine der Alt der Darstellung von Fig. 3 und 4 entsprechende Teil-Darstellung zweier miteinander verschweißter Rippenrohre.

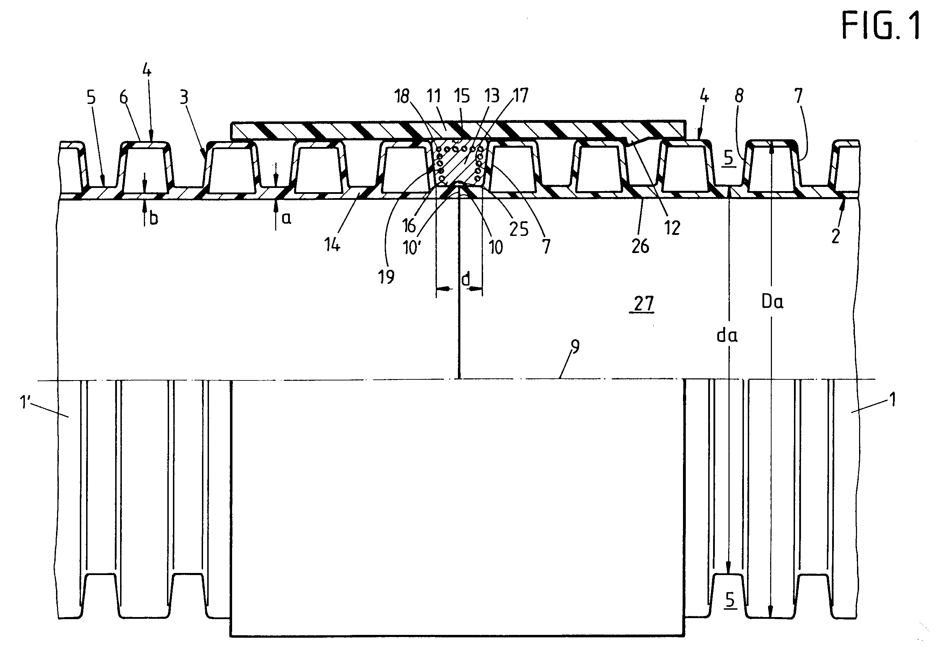

Fig. 1 zeigt zwei miteinander verbundene Rohre 1, 1' bei denen es sich um Verbundrohre bzw. Doppelwandrohre handelt. Sie bestehen jeweils aus einem durchgehend zylindrischen Innen-Rohr 2 und einem gewellten Außen-Rohr 3. Die Herstellung dieser Rohre erfolgt in aus der DE 17 04 718 B2 (entspr. US 3 677 676 A) bekannter Weise, wobei die Verbindung zwischen Innen-Rohr 2 und Außen-Rohr 3 stattfindet, wenn die später das Innen-Rohr 2 und das Außen-Rohr 3 bildenden warmplastischen Schläuche aus Kunststoff hinter dem Spritzkopf des Extruders zusammengeführt werden. Im Bereich zwischen zwei benachbarten Kreisringen 4 des Außen-Rohres 3, also im Bereich eines Wellentales 5 des Außen-Rohres 3, sind Innen-Rohr 2 und Außen-Rohr 3 einstückig und weisen dort eine größere Wanddicke a auf als die Wanddicke b des Innen-Rohres 2 innerhalb eines Kreisringes 4.

Jeder Kreisring 4 hat - wie aus der Zeichnung hervorgeht - den Querschnitt eines sich nach außen leicht verjüngenden Trapezes, wobei dieser Trapez-Querschnitt außen durch einen ringzylindrischen Außenwand-Abschnitt 6 und seitlich durch zwei Seitenwand-Abschnitte 7, 8 begrenzt wird, die - bezogen auf die Mittel-Längs-Achse 9 der Rohre 1, 1' - radial nach außen aufeinanderzugeneigt sind. Die Basis des Trapezes wird durch das jeweilige Innen-Rohr 2 gebildet.

Die beiden Rohre 1, 1' liegen mit ihrer jeweiligen Stirnwand 10, 10' stumpf gegeneinander. Die Stirnwände 10, 10' sind jeweils im Bereich eines Wellentales 5, also dort, wo die Wanddicke a maximal ist, angeordnet.

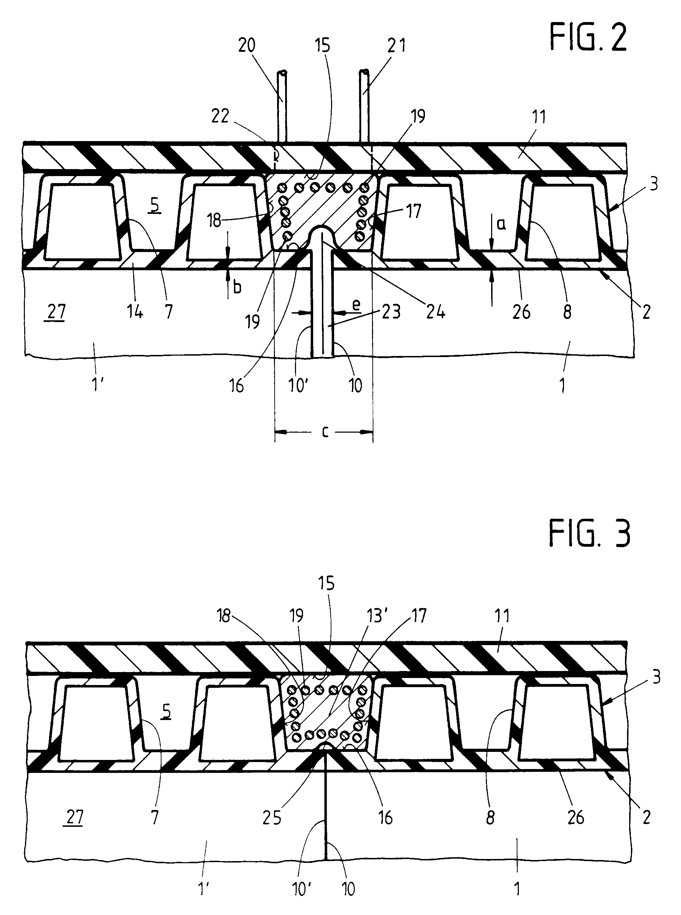

Die Montage der beiden als Verbundrohre ausgebildeten Rohre 1, 1' wird anhand der Fig. 1 und 2 erläutert. Nach dem Abschneiden der Rohre 1, 1' im Bereich der Stirnwand 10, 10' wird auf ein Rohr 1 eine rohrförmige Muffe 11 mit ringzylindrischem Querschnitt aufgeschoben, deren Innendurchmesser im wesentlichen dem Außendurchmesser Da der Rohre im Bereich der Kreisringe 4 entspricht. Die Muffe 11 kann einen widerhakenförmigen Anschlag 12 aufweisen, der sich nach dem Aufschieben der Muffe 11 auf das Rohr 1 hinter eine Seitenwand 7 eines Kreisrings 4 legt. Die Muffe 11 ist also zentriert auf dem Rohr 1 gehalten. Die Muffe 11 kann auch anstelle durch einen Anschlag 12 durch Verkleben oder Verschweißen mit dem Rohr 1 verbunden sein. Entscheidend ist, daß die Muffe 11 unter anderem zum Zentrieren der beiden Rohre 1, 1' zueinander dient.

Nach dem Befestigen der Muffe 11 am Rohr 1 wird stirnseitig ein Schweißring 13 in den Bereich zwischen Muffe 11 und dem die Stirnwand 10 aufweisenden Wellental-Wandabschnitt 14 eingeschoben, und zwar bis zur Anlage gegen den der Stirnwand 10 benachbarten Seitenwand-Abschnitt 7. Der Schweißring 13 weist eine zylindrische Außenseite 15 auf, deren Durchmesser etwa dem Durchmesser Da entspricht. Er weist weiterhin eine zylindrische Innenseite 16 auf, deren Durchmesser etwa dem Außendurchmesser da der Rohre 1, 1' im Bereich der Wellentäler 5 entspricht. Wie der Zeichnung entnehmbar ist, ist der Schweißring 13 im Querschnitt trapezförmig ausgebildet, wobei seine Stirnseiten 17, 18 von der Achse 9 aus gesehen radial nach außen voneinander weg geneigt sind, und zwar entsprechend der Neigung der Seitenwandabschnitte 7, 8, so daß die Stirnseite 17 flächig zur Anlage an dem Seitenwand-Abschnitt 7 kommt und die Stirnseite 18 flächig zur Anlage am Seitenwand-Abschnitt 8 kommt. Der Schweißring 13 muß nicht diese vorstehend beschriebene exakte Querschnittsform aufweisen; er kann beispielsweise auch nur im oberen Bereich seiner Stirnseiten 17, 18 gegen die Seitenwand-Abschnitt 7, 8 anliegen. Entscheidend ist, daß ein Verschweißen aufgrund des Schweißdruckes erfolgt.

Der Schweißring besteht aus einem thermoplastischem Kunststoff und zwar bevorzugt aus dem gleichen thermoplastischen Kunststoff wie die Rohre 1, 1'. Er ist mit einer elektrischen Widerstandsheizung versehen, deren Widerstands-Heizdrähte 19 insbesondere benachbart zu den Stirnseiten 17, 18 und zur zylindrischen Außenseite 15 angeordnet sind. Im Bereich der zylindrischen Innenseite 16 sind in der Regel keine Widerstands-Heizdrähte 19 vorgesehen. Die aus der zylindrischen Außenseite 15 des Schweißringes 13 herausgeführten Anschluß-Enden 20, 21 der Widerstands-Heizdrähte 19 werden durch nur angedeutete Öffnungen oder Schlitze 22 in der Muffe 11 nach außen aus dieser herausgeführt. Die Widerstands-Heizdrähte 19 werden in der Regel durch einen vielfach gewickelten Heizdraht gebildet.

Wie Fig. 2 entnehmbar ist, ist die axiale Erstreckung c des Schweißringes 13 im Bereich seiner zylindrischen Innenseite 16 bei der Montage, also vor dem Verschweißen (s. Fig. 2) größer als die entsprechende axiale Erstreckung d nach dem Verschweißen (s. Fig. 1). Aus der Differenz von c - d = e ergibt sich, daß nach dem Zusammenfügen der Rohre 1, 1' mit dem Schweißring 13 in der Muffe 11 zwischen den Stirnwänden 10, 10' der Wellental-Abschnitte 14 ein Ringspalt 23 mit einer axialen Breite e verbleibt. In der zylindrischen Innenseite 16 des Schweißringes 13 ist eine Volumen-Ausgleichs-Nut ausgebildet, die sich in der Regel mit dem Ringspalt 23 deckt.

Nach dem geschilderten Zusammenfügen der Rohre 1, 1' werden die Anschluß-Enden 20, 21 der Widerstands-Heizdrähte 19 an eine Stromquelle angeschlossen. Durch die hierbei entstehende Wärme wird der thermoplastische Werkstoff des Schweißringes 13 insbesondere im Bereich der Stirnseiten 17, 18 und der zylindrischen Außenseite 15 geschmolzen und hierbei gleichzeitig der zugewandte Oberflächenbereich der Muffe 11 und der Seitenwand-Abschnitte 7, 8 angeschmolzen. Die beiden Rohre 1, 1' werden in Richtung der Achse 9 gegeneinander gepreßt, bis die Stirnwände 10, 10' gegeneinander liegen, die hierbei nicht oder jedenfalls nicht vollständig miteinander verschweißt werden. Das beim Zusammenpressen der Rohre 1, 1 verdrängte Volumen des Schweißringes 13 wird von der Volumen-Ausgleichs-Nut 24 und den sonstigen Freiräumen zwischen dem Schweißring 13, den Seitenwand-Abschnitten 7, 8 und der Muffe 11 aufgenommen. Die Volumen-Ausgleichs-Nut 24 ist so bemessen, daß nach dem vollständigen Zusammenpressen der Rohre 1, 1' bis zur Anlage der Stirnwände 10, 10' gegeneinander noch eine Rest-Ausgleichs-Nut 25 an der Stoßstelle der Stirnwände 10, 10' ist und diese umgibt. Hierdurch wird vermieden, daß geschmolzener Werkstoff des Schweißringes 13 in den Ringspalt 23 zwischen den Stirnwänden 10, 10' gelangt. Insbesondere wird weiterhin hierdurch vermieden, daß Material des Schweißringes 13 oder von den Stirnwänden 10, 10' als Wulst an die Innenseite 26 des Innen-Rohres 2 gelangt und damit in dessen Innenraum 27 vorsteht.

Das Ausführungsbeispiel nach Fig. 3 unterscheidet sich von dem nach den Fig. 1 und 2 nur dadurch, daß der Schweißring 13' hinausgehend über die Ausgestaltung nach den Fig. 1 und 2 auch benachbart zu seiner zylindrischen Innenseite 16 mit Widerstands-Heizdrähten 19 versehen ist, deren Abstand von der Innenseite 16 aber so groß sein muß, daß ausreichender Platz für eine Volumen-Ausgleichs-Nut vorhanden ist. Da Fig. 3 die beiden Rohre 1, 1' in bereits verbundenem Zustand zeigt, ist nur noch die Rest-Ausgleichs-Nut 25 erkennbar.

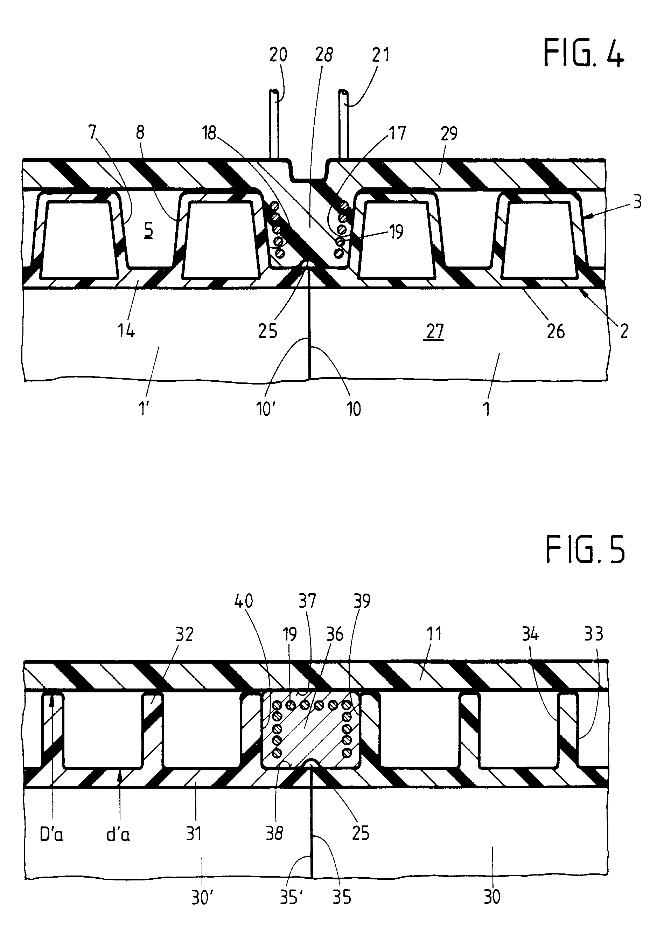

Bei dem Ausführungsbeispiel nach Fig. 4 ist bei identischer Ausgestaltung der Rohre 1, 1' ein Schweißring 28 einstückig mit einer Muffe 29 ausgebildet. Die Ausgestaltung des Schweißringes 28 hinsichtlich seiner Stirnseiten 17, 18 und seiner zylindrischen Innenseite 16 entspricht der bereits geschilderten Ausgestaltung. Da ein Verschweißen des Schweißringes 28 mit der Muffe 29 nicht mehr erforderlich ist, sind am Übergangsbereich zwischen diesen beiden Teilen keine Heizdrähte 19 vorgesehen. Es sind vielmehr nur Heizdrähte 19 benachbart zu den Stirnseiten 17, 18 vorgesehen. Vor der Montage ist in gleicher Weise eine Volumen-Ausgleichs-Nut 24 im Bereich der Innenseite 16 ausgebildet, von der nach dem Zusammenpressen und Verschweißen der Rohre 1, 1' noch eine Rest-Ausgleichs-Nut 25 bleibt. Die Anschluß-Enden 20, 21 der Widerstands-Heizdrähte 19 sind unmittelbar aus der Muffe 29 herausgeführt. Sie werden bei der Herstellung der Muffe 29 mit Schweißring 28 - wie auch die Heizdrähte 19 - in die Spritzform eingelegt. Bei dieser Ausgestaltung weist die Muffe 29 keinen Anschlag auf. Die Muffe 29 dient nur noch zum Zentrieren der beiden Rohre 1, 1'.

In Fig. 5 handelt es sich bei den miteinander zu verbindenden Rohren 30, 30' um Rippenrohre. Derartige Rippenrohre sind beispielsweise aus der DE 24 50 171 C2 (entspr. US 3 998 579 A) bzw. der DE 37 25 286 A1 (entspr. US 4 900 503 A) bekannt. Sie weisen ein im wesentlichen ringzylindrisches Innen-Rohr 31 auf, auf dessen Außenumfang Radial-Rippen 32 nach außen vorstehen, die einen Außen-Durchmesser D'a aufweisen. Das Innen-Rohr 31 weist einen Außendurchmesser d'a auf. Die Rippen 32 weisen Seitenwandabschnitte 33, 34 auf, die zumindest angenähert parallel zueinander verlaufen. Die beiden Rohre 30, 30' weisen an ihren Innen-Rohren 31 Stirnwände 35, 35' auf, die im Abstand zu einer benachbarten Rippe 32 liegen. Zum Verschweißen derartiger Rohre 30, 30' wird ein Schweißring 36 verwendet, der etwa rechteckigen Querschnitt aufweist, d.h. er weist eine zylindrische Außenseite 37, eine zylindrische Innenseite 38 und zwei Stirnseiten 39, 40 auf. Ähnlich der Ausgestaltung nach den Fig. 1 und 2 sind im Schweißring 36 benachbart zu den Stirnseiten 39, 40 und zur zylindrischen Außenseite 37 elektrische Widerstands-Heizdrähte 19 vorgesehen. In gleicher Weise wie in den Ausführungsbeispielen nach den Fig. 1 bis 3 weist der Schweißring 36 vor der Montage in Richtung der Achse 9 Übermaß auf, so daß vor dem Verschweißen zwischen den Stirnwänden 35, 35' ein Ringspalt entsteht. Er weist in gleicher Weise eine Volumen-Ausgleichs-Nut auf, von der nach dem Verschweißen noch eine Rest-Ausgleichs-Nut 25 verbleibt.

Anstelle der Volumen-Ausgleichs-Nut 24 in den Schweißringen 13, 13', 28, 36 kann in der jeweiligen Muffe 11, 29 eine in der Zeichnung nicht dargestellte Öffnung vorhanden sein, aus der das beim Zusammenpressen der Rohre verdrängte Material des Schweißringes austreten kann.

Als Material der zu verschweißenden Rohre 1, 1' bzw. 30, 30' kommt primär Polyethylen und zwar insbesondere Hochdruck-Polyethylen und Polypropylen in Betracht. Die Schweißringe 13, 13', 28, 36 bestehen in der Regel aus demselben Material wie die Rohre 1, 1' bzw. 30, 30'.

Anstelle einer Muffe 11 kann auch ein Zentrierring verwendet werden, der beispielsweise die Form einer aufklappbaren Muffe aufweist und der dazu dient, das Material des Schweißrings 13 in dem Verschweißungsbereich zu halten. Ein solcher Zentrierring wird nach dem Verschweißen wieder abgenommen.

**Patentansprüche**

1. Verfahren zum Verschweißen von jeweils zwei aus thermoplastischem Kunststoff bestehenden Rohren (1, 1'; 30, 30') bestehend aus
   - jeweils einem Innen-Rohr (2; 31) mit jeweils einer Stirnwand (10, 10'; 35, 35')
   - von dem Innen-Rohr (2;31) radial nach außen vorstehenden Erhebungen (Kreisring 4; Radial-Rippe 32), die durch Seitenwand-Abschnitte (7,8; 33, 34) begrenzt sind,
   gekennzeichnet durch folgende Verfahrensschritte
   - ein Rohr (1; 30) wird mit einer über dessen Stirnwand (10; 35) vorstehenden Muffe (11; 29) versehen,
   - auf einen eine Stirnwand (10, 10'; 35, 35') aufweisenden Innen-Rohr-Abschnitt (14, 31) wird ein aus thermoplastischem Kunststoff bestehender, mit einer elektrischen Widerstandsheizung versehener Schweißring (13; 13'; 28; 36) aufgeschoben,

   - die beiden Rohre (1, 1'; 30, 30') werden fluchtend in der Muffe (11; 29) aufeinanderzu geschoben,
   - der Schweißring (13; 13'; 28; 36) wird durch Beaufschlagung der elektrischen Widerstands-Heizung mit elektrischem Strom zumindest im Bereich seiner den benachbarten Erhebungen (Kreisring 4; Radial-Rippe 32) zugewandten Stirnseiten (17, 18; 39, 40) geschmolzen,
   - die Rohre (1, 1'; 30, 30') werden unter Verformung des Schweißringes (13; 13'; 28; 36) aufeinanderzu gedrückt bis ihre Stirnwände (10, 10'; 35, 35') aneinander liegen und
   - der elektrische Strom wird abgeschaltet, und die Stirnseiten (17, 18; 39, 40) des Schweißringes (13; 13'; 28;36) werden mit Seitenwand-Abschnitten (7, 8; 33, 34) der Erhebungen (Kreisring 4; Radial-Rippe 32) durch Abkühlen verbunden.

2. Verfahren nach Anspruch 1, dadurch gekennzeichnet, daß ein von der Muffe (11) gesonderter Schweißring (13;13';36) eingesetzt wird.

3. Verfahren nach Anspruch 1, dadurch gekennzeichnet, daß ein einstückig mit der Muffe (29) ausgebildeter Schweißring (28) eingesetzt wird.

4. Verfahren nach Anspruch 2, dadurch gekennzeichnet, daß ein Schweißring (13;13';36) eingesetzt wird, der benachbart zu seinen Stirnseiten (17, 18; 39, 40) und zu seiner Außenseite (15; 37) eine elektrische Widerstands-Heizung aufweist.

5. Verfahren nach Anspruch 1, dadurch gekennzeichnet, daß bei Anliegen des Schweißringes (13;13'; 28; 36) an den Seitenwand-Abschnitten (7, 8; 33, 34) der der jeweiligen Stirnwand (10, 10'; 35, 35') benachbarten Erhebung (Kreisring 4; Radial-Rippe 32) und vor dem Schmelzen des Schweißringes (13; 13'; 28; 36) zwischen den Stirnwänden (10, 10'; 35, 35') ein Ringspalt (23) gebildet ist.

6. Verfahren nach Anspruch 5, dadurch gekennzeichnet, daß ein Schweißring (13; 13'; 28; 36) eingesetzt wird, der mit einer Volumen-Ausgleichs-Ausnehmung (Volumen-Ausgleichs-Nut 24) versehen ist.

7. Verfahren nach Anspruch 6, dadurch gekennzeichnet, daß ein Schweißring (13; 13'; 28; 36) eingesetzt wird, dessen Volumen-Ausgleichs-Ausnehmung als Volumen-Ausgleichs-Nut (24) an einer Innenseite (16; 38) des Schweißringes (13; 13'; 28; 36) ausgebildet ist, die den Ringspalt (23) überdeckt.

8. Verfahren nach Anspruch 7, dadurch gekennzeichnet, daß nach dem Schweißen eine Rest-Ausgleichs-Nut (25) vorhanden ist, die die aneinander liegenden Stirnwände (10, 10'; 35, 35') überdeckt.

9. Verfahren nach Anspruch 1, dadurch gekennzeichnet, daß ein Schweißring (13;13'; 28; 36) eingesetzt wird, dessen Innendurchmesser etwa dem Außendurchmesser (da; d'a) des Innen-Rohres (2;31) entspricht.

10. Verfahren nach Anspruch 1, dadurch gekennzeichnet, daß ein Schweißring (13;13'; 28;36) eingesetzt wird, dessen Stirnseiten (17, 18; 39, 40) eine Neigung der Mittel-Längs-Achse der Rohre (1, 1'; 30, 30') aufweisen, die einer Neigung der Seitenwand-Abschnitte (7, 8; 33, 34) zur Mittel-Längs-Achse (9) entspricht.

11. Verfahren nach Anspruch 2, dadurch gekennzeichnet, daß ein Schweißring (13;13'; 36) eingesetzt wird, dessen Außendurchmesser dem Außendurchmesser (Da; D'a) des Rohres (1, 1'; 30, 30') etwa entspricht.

12. Verfahren nach Anspruch 1, dadurch gekennzeichnet, daß eine Muffe (11; 29) eingesetzt wird, deren Innendurchmesser dem Außendurchmesser (Da; D'a) der Rohre (1, 1'; 30, 30') etwa entspricht.

**Claims**

1. A method for welding together two pipes (1, 1'; 30, 30') consisting of thermoplastic plastics each comprising
   - an inner pipe (2; 31) with a front wall (10, 10'; 35, 35')
   - elevations (annular ring 4; radial rib 32) projecting radially outwards from the inner pipe (2; 31), which elevations are defined by side wall portions (7, 8; 33, 34),
   characterized by the following method steps
   - a pipe (1; 30) is provided with a socket (11; 29) projecting beyond its front wall (10; 35),
   - a welding ring (13; 13'; 28; 36) consisting of thermoplastic plastics and provided with an electric resistance heating is pushed onto a portion (14, 31) of the inner pipe comprising a front wall (10, 10'; 35, 35'),
   - the two pipes (1, 1'; 30, 30') are pushed in an aligned manner in a direction towards each other in the socket (11; 29),
   - the welding ring (13; 13'; 28; 36) is melted at least in the region of its faces (17, 18; 39, 40) facing the adjacent elevations (annular ring 4; radial rib 32) by actuating the electric resistance heating with electric current,
   - the pipes (1, 1'; 30, 30') are pressed in direction towards each other while deforming the welding ring (13; 13'; 28; 36) until their front walls (10, 10'; 35, 35') bear against each other, and
   - the electric current is switched off, and the faces (17, 18; 39, 40) of the welding ring (13; 13'; 28; 36) are connected by cooling with side wall portions (7, 8; 33, 34) of the elevations (annular ring 4; radial rib 32).

2. Method according to claim 1, characterized in that a welding ring (13; 13'; 36) separated from the socket (11) is used.

3. Method according to claim 1, characterized in that a welding ring (28) formed in one piece with the socket (29) is used.

4. Method according to claim 2, characterized in that a welding ring (13; 13'; 36) is used, which comprises an electric resistance heating adjacent to its faces (17, 18; 39, 40) and to its outer side (15; 37).

5. Method according to claim 1, characterized in that an annular gap (23) is formed between the front walls (10, 10'; 35, 35') when the welding ring (13; 13'; 28; 36) bears against the side wall portions (7, 8; 33, 34) of the elevation (annular ring 4; radial rib 32) adjacent to the respective front wall (10, 10'; 35, 35') and prior to the melting of the welding ring (13; 13'; 28; 36).

6. Method according to claim 5, characterized in that a welding ring (13; 13'; 28; 36) is used, which is provided with a volume compensating recess (volume compensating groove 24).

7. Method according to claim 6, characterized in that a welding ring (13; 13'; 28; 36) is used, the volume compensating recess of which is formed as a volume compensating groove (24) on an inner side (16; 38) of the welding ring (13; 13'; 28; 36), which volume compensating groove (24) coincides with the annular gap (23).

**8.** Method according to claim 7, characterized in that a residue compensating groove (25) exists after the welding, which coincides with the front walls (10, 10'; 35, 35') bearing against each other.

**9.** Method according to claim 1, characterized in that a welding ring (13; 13'; 28; 36) is used, the inner diameter of which corresponds approximately to the outer diameter (da; d'a) of the inner pipe (2; 31).

**10.** Method according to claim 1, characterized in that a welding ring (13; 13'; 28; 36) is used, the faces (17, 18; 39, 40) of which have an inclination of the central longitudinal axis of the pipes (1, 1'; 30, 30'), which corresponds to an inclination of the side wall portions (7, 8; 33, 34) towards the central longitudinal axis (9).

**11.** Method according to claim 2, characterized in that a welding ring (13; 13'; 36) is used, the outer diameter of which corresponds approximately to the outer diameter (Da; D'a) of the pipe (1, 1'; 30, 30').

**12.** Method according to claim 1, characterized in that a socket (11; 29) is used, the inner diameter of which corresponds approximately to the outer diameter (Da; D'a) of the pipes (1, 1'; 30, 30').

**Revendications**

**1.** Procédé pour le soudage de deux tuyaux (1, 1' ; 30, 30') en matière thermoplastique constitués chacun :
- d'un tube intérieur (2 ; 31) présentant une paroi frontale (10, 10' ; 35, 35'),
- de reliefs (anneau circulaire 4 ; nervure radiale 32) qui font saillie du tube intérieur (2 ; 31) radialement vers l'extérieur et qui sont délimités par des portions (7, 8 ; 33, 34) formant parois latérales,
  caractérisé par les étapes suivantes :
- un tuyau (1 ; 30) est muni d'un manchon (11 ; 29) qui dépasse de sa paroi frontale (10 ; 35),
- un anneau de soudage (13 ; 13' ; 28 ; 36) réalisé en matière thermoplastique et muni d'un dispositif de chauffage électrique par résistance est emmanché sur une portion (14, 31) du tube intérieur présentant une paroi frontale (10, 10' ; 35, 35'),
- les deux tuyaux (1, 1' ; 30, 30') sont poussés l'un vers l'autre dans le manchon (11 ; 29) de manière à être alignés,

- en envoyant du courant électrique dans le dispositif de chauffage électrique par résistance, l'anneau de soudage (13 ; 13' ; 28 ; 36) est fondu au moins dans la zone de ses faces frontales (17, 18 ; 39, 40) tournées vers les reliefs voisins (anneau circulaire 4 ; nervure radiale 32),
- les tuyaux (1, 1' ; 30, 30') sont poussés l'un vers l'autre en déformant l'anneau de soudage (13 ; 13' ; 28 ; 36) jusqu'à ce que leurs parois frontales (10, 10' ; 35, 35') soient en contact, et
- le courant électrique est coupé et les faces frontales (17, 18 ; 39, 40) de l'anneau de soudage (13 ; 13' ; 28 ; 36) sont reliés par refroidissement aux portions (7, 8 ; 33, 34) formant parois latérales des reliefs (anneau circulaire 4 ; nervure radiale 32).

**2.** Procédé selon la revendication 1, caractérisé en ce que l'anneau de soudage utilisé (13 ; 13' ; 36) est distinct du manchon (11).

**3.** Procédé selon la revendication 1, caractérisé en ce que l'anneau de soudage utilisé (28) est réalisé d'un seul tenant avec le manchon (29).

**4.** Procédé selon la revendication 2, caractérisé en ce qu'il utilise un anneau de soudage (13 ; 13' ; 36) qui comporte un dispositif de chauffage électrique par résistance au voisinage de ses faces frontales (17, 18 ; 39, 40) et de son côté extérieur (15 ; 37).

**5.** Procédé selon la revendication 1, caractérisé en ce qu'un interstice annulaire (23) est formé entre les parois frontales (10, 10' ; 35, 35') lorsque l'anneau de soudage (13 ; 13' ; 28 ; 36) est appliqué contre les portions (7, 8 ; 33, 34) formant parois latérales du relief (anneau circulaire 4 ; nervure radiale 32) voisin de la paroi frontale correspondante (10, 10' ; 35, 35') et avant la fusion de l'anneau de soudage (13 ; 13' ; 28 ; 36)

**6.** Procédé selon la revendication 5, caractérisé en ce que l'anneau de soudage utilisé (13 ; 13' ; 28 ; 36) comporte un évidement compensateur de volume (rainure compensatrice de volume 24).

**7.** Procédé selon la revendication 6, caractérisé en ce qu'il utilise un anneau de soudage (13 ; 13' ; 28 ; 36) dont l'évidement compensateur de volume est conçu sous la forme d'une rainure compensatrice de volume (24) qui est ménagée sur le côté intérieur (16 ; 38) de l'anneau de soudage (13 ; 13' ; 28 ; 36) et qui recouvre l'interstice annulaire (23).

8. Procédé selon la revendication 7, caractérisé en ce qu'au terme du soudage, il subsiste une rainure compensatrice résiduelle (25) qui recouvre les parois frontales (10, 10' ; 35, 35') appliquées l'une contre l'autre.

9. Procédé selon la revendication 1, caractérisé en ce qu'il utilise un anneau de soudage (13 ; 13' ; 28 ; 36) dont le diamètre intérieur correspond sensiblement au diamètre extérieur (da ; d'a) du tube intérieur (2 ; 31).

10. Procédé selon la revendication 1, caractérisé en ce qu'il utilise un anneau de soudage (13 ; 13' ; 28 ; 36) dont les faces frontales (17, 18 ; 39, 40) présentent, par rapport à l'axe longitudinal médian des tuyaux (1, 1' ; 30, 30') une inclinaison correspondant à celle des portions (7, 8 ; 33, 34) formant parois latérales par rapport à l'axe longitudinal médian (9).

11. Procédé selon la revendication 2, caractérisé en ce qu'il utilise un anneau de soudage (13 ; 13' ; 36) dont le diamètre extérieur correspond sensiblement au diamètre extérieur (Da ; D'a) du tuyau (1, 1' ; 30, 30').

12. Procédé selon la revendication 1, caractérisé en ce qu'il utilise un manchon (11 ; 29) dont le diamètre intérieur correspond sensiblement au diamètre extérieur (Da ; D'a) des tuyaux (1, 1' ; 30, 30').

FIG.1

EP 0 531 750 B1

FIG. 2

FIG. 3

FIG. 4

FIG. 5